# EUROPEAN PATENT SPECIFICATION

(11) **EP 0 333 213 B1**
(45) Date of publication and mention of the grant of the patent: **31.07.1996**
(21) Application number: 89104804.3
(22) Date of filing: 17.03.1989
(51) Int. Cl.: G06F 9/46

(54) **Microcomputer producing pulses at outout ports in sequence in response to request signal**
Mikrorechner zum aufeinanderfolgenden Erzeugen von Impulsen an Ausgangstore als Antwort auf Anforderungssignale
Micro-ordinateur pour la génération des impulsions séquentielles à des portes de sortie en réponse aux signaux de demande

(30) Priority: 18.03.1988 JP 66454/88
(43) Date of publication of application: 20.09.1989
(73) Proprietor: NEC CORPORATION, Tokyo (JP)
(72) Inventor: Misawa, Yukari, Minato-ku Tokyo (JP); Sakuma, Hajime, Minato-ku Tokyo (JP)
(74) Representative: Glawe, Delfs, Moll & Partner

(56) References cited:
- PATENT ABSTRACTS OF JAPAN vol. 12, no. 368 (P-766)(3215) 4 October 1988 & JP-A-63 118 949
- PATENT ABSTRACTS OF JAPAN vol. 10, no. 326 (M-532)6 November 1986 & JP-A-61 134 265
- WESCON/87 CONFERENCE RECORD vol. 31, no. 1/3, 1987, Los Angeles, California, US, pp. 1-7; D.H. COBBS: 'The V35: A Microcomputer that services interrupts without software'
- IEEE MICRO vol. 6, no. 6, December 1986, New York, US, pp. 29-48; K.L. KLOKER: 'The Motorola DSP56000 Digital Signal Processor'

## Description

The invention relates to a micro-computer as defined in the preamble of claim 1. A micro-computer of this type is known form JP-A-61 134 265 (patents abstract of Japan, Vol. 10, No. 236 (M-532)).

A microcomputer has been widely used as a central processor in various systems, and is constructed so as to perform functions for various controls. One of such functions is a sequential pulse producing function which produces pulses at a plurality of output ports in sequence in response to a pulse request signal. The pulses thus produced sequentially are supplied to the equipment to be directly controlled to perform a desirable operating condition. For producing such pulses, a pulse request signal is generated by a peripheral unit such as a timer circuit, a serial interface circuit or the like provided internally in the microcomputer, or by the equipment to be controlled, in asynchronism with the data processing operation of the microcomputer. Accordingly, the micro-computer deals with the pulse request signal as an interrupt request signal and performs the sequential pulse producing function by executing an interruption program.

More specifically, when the pulse request signal is generated, the microcomputer suspends the execution of a main program, saves the current contents of a program counter and a program status word register into a data memory, and thereafter loads the leading address of the interruption program to the program counter to execute the same. In executing the interruption program, the microcomputer detects the output port or ports which are currently producing a pulse to determine an output port at which a pulse is to be next produced, sets that output port at which a pulse is determined to be produced, and changes with a new data which is used for detecting the output port or ports producing the pulse. After the execution of the interrupt program, the microcomputer restores the saved contents into the program counter and the program status word register and resumes the suspended main program.

Thus, the microcomputer according to prior art performs the sequential pulse producing function by executing the interruption program, and for this reason there occurs a time-delay from the generation of the pulse request signal to the actual production of the pulse at the selected output port. That is, this microcomputer does not carry out a real-time control operation. Moreover, in a case where the pulse request signal is frequently generated, a time for saving and restoring the contents of the program counter and the program status word register responsive to the start and termination of the interruption program is increased, so that the execution efficiency of the main program is reduced.

### SUMMARY OF THE INVENTION

Therefore, an object of the present invention as it is defined in claims 1-6 is to provide a microcomputer performing a sequential pulse producing function in a real-time.

Another object of the present invention is to provide a microcomputer for producing pulses at a plurality of output ports in sequence in response to a request signal generated asynchronously without reducing program execution efficiency.

Still another object of the present invention is to provide a microcomputer in which an output port producing a pulse can be selected without an interruption program (i.e., user's program).

A microcomputer according to the present invention comprizes a central processor including a program memory storing a program to be executed, a program counter designating an address of the program memory in which an instruction to be executed is stored, an execution unit executing an instruction read from the program memory, and a program status word register storing an execution condition of the execution unit; and a pulse producing unit including a plurality of output ports, an output port control register temporarily storing data for designating at least one of the output ports at which a pulse is to be produced, a timing generator generating a pulse request signal, and means responsive to the pulse request signal for producing a pulse at the output port which is designated by the data stored in the output port control register. The central processor further includes means responsive to the pulse request signal for suspending the execution of the program and executing a macro service without saving the contents of the program counter and program status word register and with maintaining them as they are, this means containing means for accessing the output port control register to read data therefrom, means for changing the read-out data to designate another of the output ports, and means for accessing the output port control register to write the changed data thereinto.

Thus, the pulse is produced at the selected output port in response immediately to the pulse request signal, so that a substantial time-delay does not occur. Moreover, the change of the data for designating the output port is performed as the macro service without saving the contents of the program counter and program status word register, so that the program execution efficiency is improved even when the pulse request signal is frequently generated.

### BRIEF DESCRIPTION OF THE DRAWINGS

The above and other objects, advantages and features of the present invention will be more apparent from the following description taken in conjunction with the accompanying drawings, in which:
Fig. 1 is a block diagram representating a microcomputer according to an embodiment of the present invention;
Fig. 2 is a timing chart of pulses produced by the microcomputer shown in Fig. 1;
Fig. 3 is a flow-chart representating a macro service executed by the microcomputer shown in Fig. 1;
Fig. 4 is a block diagram representating a part of a microcomputer according to another embodiment of the present invention; and
Fig. 5 is a flow chart representating a macro service executed by the microcomputer shown in Fig. 4.

### DETAILED DESCRIPTION OF THE PREFERRED EMBODIMENTS

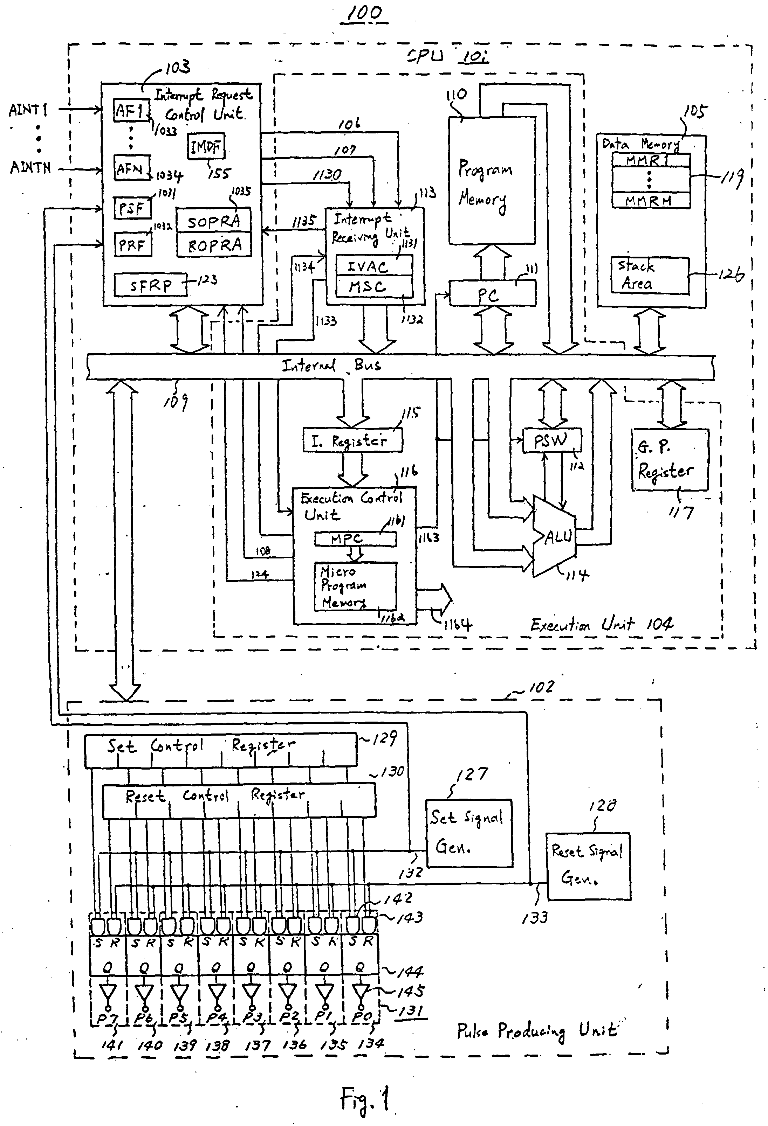

Referring to Fig. 1, a microcomputer 100 according to an embodiment of the present invention includes a central processing unit (CPU) 101 and a pulse producing unit 102 as a peripheral unit. This CPU 101 is constructed to perform a first interrupt processing service in which a processing responsive to an interrupt request is performed by executing a user's interrupt program after saving the contents a program counter (PC) 111 and a program status word register (PSW) 112 and a second interrupt processing service or a macro service in which a processing responsive to an interrupt request is performed without utilizing a user's program and without saving the contents of PC 111 and PSW 112. The pulse producing unit 102 is constructed to control set and reset states of each output port in response immediately to set and reset timing signals.

More specifically, the CPU 101 includes an interrupt request control unit 103, and execution unit 104 and a data memory 105. The interrupt request control unit 103 receives set and reset timing signals 132 and 133 from the pulse producing unit 102 and further receives auxiliary interrupt request signals AINT1 to AINTN from auxiliary interrupt request sources (not shown). A plurality of interrupt request detection flags (PSF, RSF, AF1 to AFN) 1031 to 1034 are provided for the respective interrupt request sources including the pulse producing unit 102. Each of the flags 1031 to 1034 is set when the corresponding interrupt request source generates an interrupt request. For example, the generation of the set and reset timing signal 132 sets the flags (PSF and RSF) 1031 and 1032, respectively. The control unit 103 also includes a plurality of interrupt mode designation flags (IMDF) for designating which service of the first and second interrupt processing services is to be executed with respect to the respective interrupt request sources. In Fig. 1, only IMDF 155 for the pulse producing unit 102 is shown. In this embodiment, the reset state of the flat 155 designates the first interrupt processing service, whereas the set state thereof designates the second interrupt processing service (macro service). The control unit 103 further includes an address pointer (SFRP) 123 and a register 1035 required for the macro service for the pulse producing unit 102 which will be described later in detail. When either one of the flags 1031 to 1034 is set in response to the generation of the corresponding interrupt request, the control unit 103 changes a signal line 106 to an active level to request an interrupt processing of the execution unit 104. Simultaneously, the unit 103 controls the logic level of a line 107 in response to the set or reset state of the flag 155 to designate the first or second interrupt processing service. In this embodiment, the signal line 107 is controlled to a high level when the flag 155 is set. On the other hand, the line 107 takes a low level when the flag 155 is reset. The control unit 103 further transfers onto a signal line 1130 information representative of the interrupt request source generating an interrupt request.

The execution unit 104 includes a program memory 110 storing a program made up by a user and containing a main routine and a plurality of interrupt routines, PC 111 designating an address of the memory 110 in which an instruction to be executed is stored, PSW 112 storing an execution condition of the unit 104, a general purpose register set 117, an instruction register 115 temporarily storing an instruction which is currently being executed, an execution control unit 116 generating various control signals 1164 for executing the instruction stored in the register 115, an arithmetic/logic unit (ALU) 114 performing an arithmetic and logic operation, and an interrupt request receiving unit 113 controlling the execution control unit 116 in response to the interrupt information from the interrupt request control unit. The content of the PC 111 is updated every time the execution of the current instruction is terminated. The execution control unit 116 includes a microprogram memory 1162 and a microprogram counter (MPC) 1161 for addressing the memory 1161. The microprogram stored in the memory 1162 contains a microprogram for the macro services for a plurality of interrupt request sources including the pulse producing unit 102. The receiving unit 113 includes a register 1131 for storing vector address information IVAC for the first interrupt processing service and a register 1132 for storing a macro service code MSC for the macro service.

The data memory 105 stores data to be processed of operation result data and includes a macro service control data area 119 for storing information representative of a required macro service operation mode and a stack area 126 to which the contents of the PC 111 and PSW 112 are saved.

The pulse producing unit 102 includes a set signal generator 127 generating a set signal 132 at set timings, a reset signal generator 128 generates a reset signal 133 at reset timings, an 8-bit parallel output port 131, an output port set control register 129 temporarily storing set data for designating a bit of the port 131 to be set and supplying it to the output port 131, and an output port reset control register 130 temporarily storing reset data for designating a bit of the port 131 to be reset and supplying it to the output port 131. The set and reset signals 132 and 133 are supplied to the output port 131 and further to the interrupt request control unit 103. Both of the set and reset signal generators 127 and 128 have a timer function to generate the set and reset signals 132 and 133 in predeterming timings in response to a clock signal (not shown) supplied thereto from the CPU 101 or an externally provided equipment (not shown). The parallel output port 131 consists of eight output unit ports 134 to 141, each of which has a set AND gate 142, a reset AND gate 143, an R-S flip-flop 144, a driver 145 and an ouput terminal P. The AND gage 142 sets the flip-flop 144 when both of the set signal 132 and the corresponding bit of the set data stored in the register 129 take the high level, and the AND gage 143 resets the flip-flop 144 when both of the reset signal 133 and the corresponding bit of the reset data stored in the register 130 take the high level.

Next, description will be made on the start of each of the first interrupt processing service and the macro service (second interrupt processing service).

When the pulse producing unit 102 or another interrupt request source generates an interrupt request, the interrupt request control unit 103 changes the signal line 106 to the active level to inform the execution unit 104 of the generation of the interrupt request. Simultaneously, the unit 103 produces the low level at the line 107 when the corresponding interrupt mode designation flag (IMDF 155, etc.) is reset or the high level at the line 107 when that flag is set, in order to designate the interrupt processing mode. The interrupt request receiving unit 113 in the execution unit 104 responds to the active level on the line 106 and producing an active level on a signal line 1133 to request the execution control unit 116 to suspend the program execution. After execution of the current instruction, the execution control unit 116 changes a signal line 1134 to the active level to inform the receiving unit 113 that the interrupt processing is allowed to be executed. In response to the active level of the line 113, the receiving unit 113 produces the active level on a signal line 1135 to reset the interrupt request detection flag 1031, 1032, 1033 or 1034 which has been set by the generated interrupt request. The unit 113 has already judged which service of the first and second interrupt processing services is designated by the logic level of the line 107. When the line 107 is at the low level, the unit 113 responds to the active level of the line 1134 and loads the vector address information IVAC stored in the register 1131 to the instruction register 115 via an internal bus 109. In response to the register 115 being loaded with the information IVAC, the execution control unit 116 saves the current contents of the PC 111 and PSW 112 to the stack area 126 of the data memory 105 and transfers the leading address of a requested interrupt program routine to the PC 111. The interrupt program routine is thus started and executed. When the execution of the interrupt program is terminated, the execution control unit 116 returns the saved contents to the PC 111 and PSW 112, respectively, so that the suspended main program is resumed. On the other hand, in case of the high level of the line 107, the unit 113 loads the macro service code MSC to the instruction register 115. By this macro service code MSC, the macro service processing routine in the microprogram memory 1162 is started and executed by the execution unit 104 without saving the contents of the PC 111 and PSW 112 and without using any instructions in the program memory 110. During execution of the macro service, the PC 111 and PSW 112 are controlled to hold the contents thereof as they area. After the execution of the macro service, the PC 111 and PSW 112 are allowed to be changed to resume the suspended program.

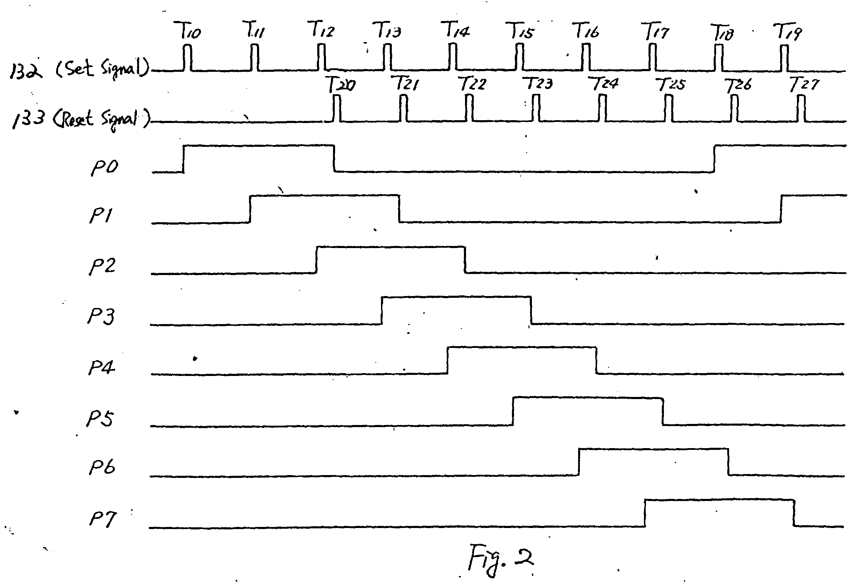

Next, the macro service responsive to the set and reset signals 132 and 133 from the pulse producing unit 102 will be described in detail with reference also to Fig. 2 showing a timing chart of a pulse pattern which is used for controlling an electronic fuel injection apparatus of a vehicle engine. Since the interrupt request from the pulse producing unit 102 is processed by the macro service, the flag 155 in the control unit 103 is set in an initial state, and the register 1035 is stored with address SOPRA and ROPRA of the output port set and reset registers 129 and 130. In addition, the area 119 of the data memory 105 is stored with data MMR1 for designating the pulse producing macro service. In case where other macro services are also required, the designation data MMRM for those are stored in the area 119. Moreover, both of the registers 129 and 130 are stored with an initial value "00000001". These sequential processing is performed by executing instructions stored in the program memory 110.

When the set signal 132 is generated at a timing T₁₀, each of the set AND gates 142 in the parallel output port 131 ANDs the set signal 132 and the corresponding bit of the initial value "00000001" of the register 129, so that the flip-flop 144 of only the output port 134 is set. The output terminal PO is thereby changed to the high level and the remaining output terminals P1 to P7 are held at the low level.

The set signal 132 is also supplied to the interrupt request control unit 103, so that the corresponding flag PSF 1031 is set. The unit 103 changes the line 106 to the active level in response to the set state of the flag 1031; and further changes the line 107 to the high level in response to the set state of the flag 155. In addition, the information representing that the interrupt request source is the pulse producing unit 102 is outputted on to the line 1130. Moreover, the control unit 103 loads to the address pointer SFRP 123 the address data SOPRA representative of the output port set control register 129. After the execution of the current instruction by the execution unit 104, the interrupt request unit 113 transfers the macro service code MSC to the instruction register 115 together with the information on the line 1130. As a result of the execution control unit 116 decoding the macro service code MSC, the MPC 1161 is set with the leading address of the macro service processing routine. The macro service thereby starts to be executed.

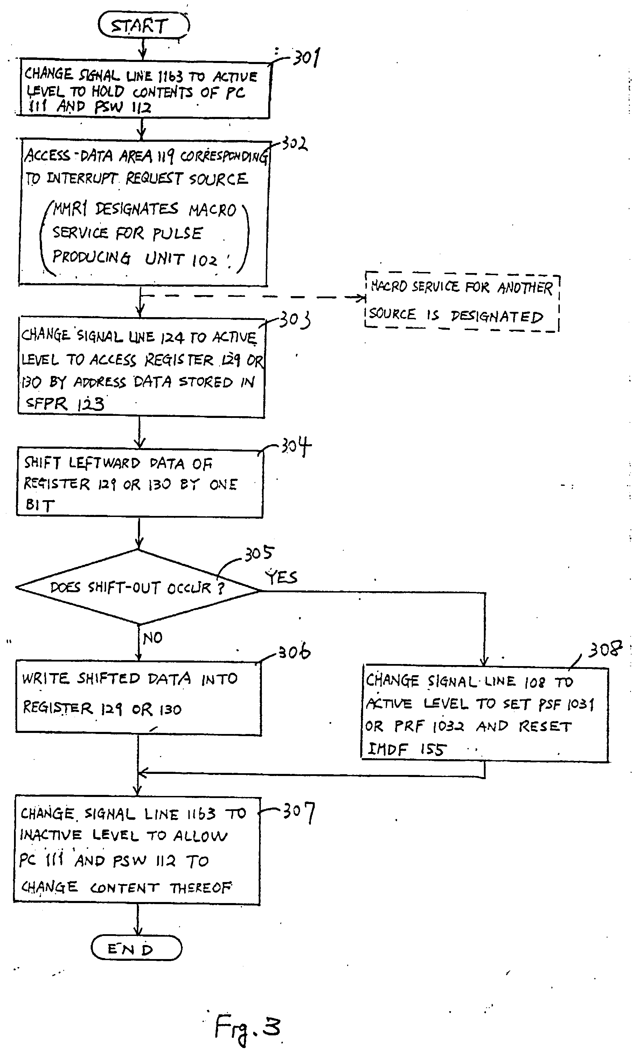

Turning to Fig. 3, there is shown a flow chart representative of the macro service according to the microprogram. At first, the execution control unit 116 outputs an active level onto a signal line 1163 to hold the current contents of the PC 111 and PSW 112 as they are (Step 301). Based on the information representative of the interrupt request source which has been supplied along with the macro service code MSC, the unit 116 makes access to an address of the area 19 corresponding to that interrupt request source to read the macro service designation information therefrom. In the present description, since the designation information MMR1 is read out, the macro service for the pulse producing unit 102 is activated (Step 302). If other designation information (MMRM, for example) is read out, another macro service is activated as shown by a dotted line. In case where the microcomputer 100 performs only the macro service for the pulse producing unit 102, the step 302 is not required and the area 119 can be omitted.

In the macro service for the pulse producing unit 102, the execution control unit 116 produces an active level on a signal line 124 and makes access to the register 129 or 130 in the unit 102 by make use of the content of the address pointer SFRP 123 in the interrupt request control unit 103 (Step 303). Since the content of SFRP 123 is address data "SOPRA", the output port set control register 129 is made access. Thereafter, the execution control unit 116 commands the ALU 114 to shift leftward the data of the register 129 by one bit (Step 304). The control unit 116 detects whether or not a shift-out occurs in the shifted result data (Step 305), and writes the shifted result data into the register 129 by make use of the address data in the SFRP 123 when the shift-out does not occur. As a result, the data in the register 129 is changed to "0000 0010" from "0000 0001". Finally, the execution control unit 116 makes the line 1163 be at an inactive level to allow the PC 111 and PSW 112 to change the contents thereof (Step 307), so that the macro service is terminated. The suspended program execution is thereby resumed, and the execution unit 104 starts to execute the instruction read from the address of the program memory 110 designated by PC 111.

The operation responsive to each of the set signals 132 occuring at timings T₁₁, T₁₂, T₁₃, T₁₄, T₁₅, T₁₆, T₁₈ and T₁₉ is similar to that at the timing T₁₀, so that the output terminal P to be changed to the high level is changed sequentially and the data of the register 129 is shifted leftward one bit by one via. On the other hand, when the set signal 132 is generated at a timing T₁₇, each of the set AND gates 142 ANDs the set signal 132 and the corresponding bit of the set data "1000 0000", so that the flip-flop 144 of the output port 141 is set to produce a pulse at the output terminal P7. In the macro service responsive to the set signal at this time, the shift-out occurs at the step 305. Therefore, the execution control unit 116 changes a signal line 108 to an active level to set PSF 1031 or PRF 1032 in the interrupt request control unit 103 and reset IMDF 155, followed by executing the step 307 to terminate the macro service. Since PSF 1031 or PRF 1032 is set and IMDF 155 is reset, the control unit 103 changes the line 106 to the active level and the line 107 to the low level. As a result, the interrupt vector address information IVAC is loaded to the instruction register 115. In response thereto, the execution control unit 116 saves the contents of PC 111 and PSW 112 to the stack area 126 of the data memory 105 and transfers the leading address of an interrupt program routine to the PC 111 to execute the interrupt program routine. In this routine, the register designated by the address data stored in the SFRP 123, i.e. the output port set control register 129, is written with the initial value "0000 0001" and the IMDF 155 is set. After execution of the interrupt program routine, the saved contents are returned to the PC 111 and PSW 112, respectively, to resume the suspended program.

When the reset signal 133 is generated at timing T₂₀ by the reset generator 128, each of the reset AND gates 143 ANDs the reset signal 133 and the corresponding bit of the reset data "0000 0001", so that the flip-flop 144 of the port 134 is reset. The output terminal PO is thereby changed to the low level to stop the production of a pulse.

The reset signal 133 sets the PRF 1032. Accordingly, the interrupt request control unit 103 changes the line 106 to the active level and the line 107 to the high level and stores into the SFRP 123 the address data "ROPRA" representative of the output port reset control register 130. The macro service is thereby activated to shift leftward the data of the register 130 by one bit. The data of the register 130 is thus changed to "0000 0010". The operation responsive to each of the reset signals 133 occurring at timings T₂₁, T₂₂, T₂₃, T₂₄, T₂₅ and T₂₆ is similar to that at the timing T₂₀. In response to the reset signal 133 at a timing T₂₇, each of the reset AND gates 143 ANDs the reset signal 133 and the corresponding bit of the reset data "1000 0000", so that the flip-flop 144 of the port 141 is reset to change the output terminal P7 to the low level. In the macro service responsive to the reset signal 133 at this time, the shift-out occurs in the one-bit-shifted result data. Therefore, the first interrupt processing service is activated to write the initial value "0000 0001" into the register BO and set the flag 155. Moreover, the timing correction of the generators 127 and 128 can be made in the interrupt program routine.

Thus, the pulse pattern shown in Fig. 2 is derived from the output port 131 of the microcomputer 100. The leading and falling edges of each pulse are substantially coincident with the set and reset signals 132 and 133, respectively. Moreover, the set and reset data of the registers 129 and 130 are changed without reducing the program executing efficiency.

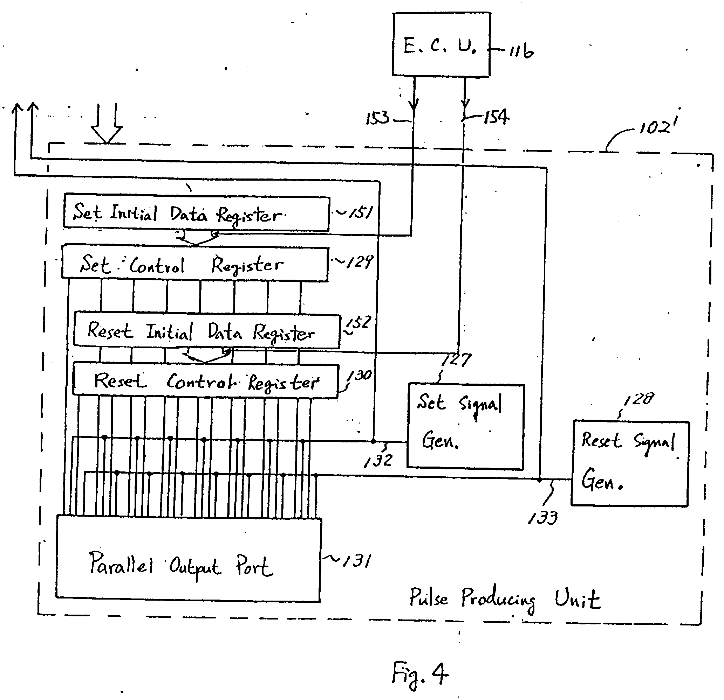

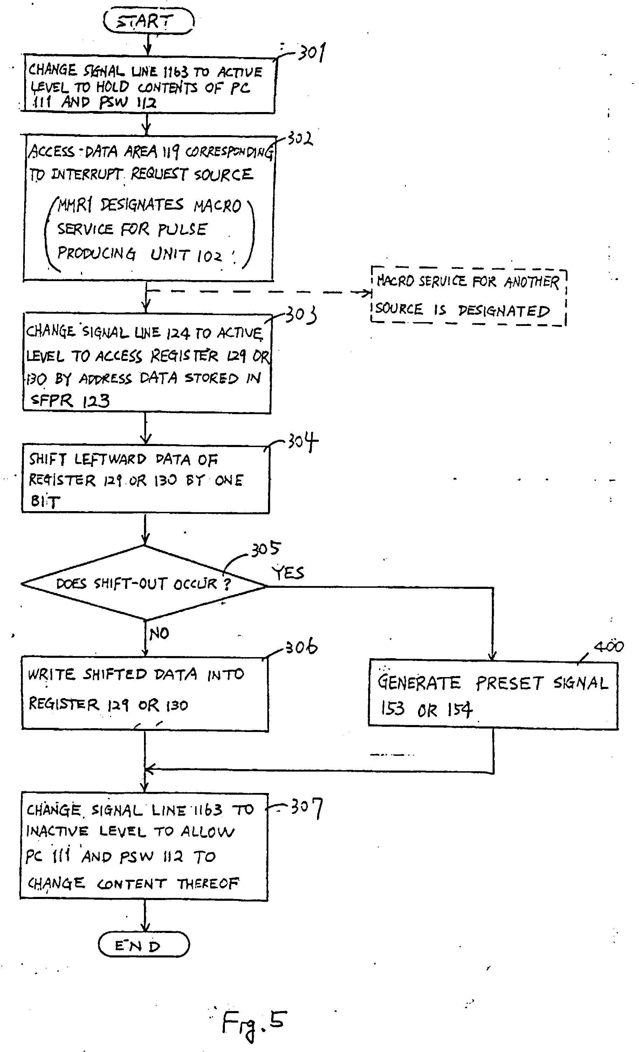

Turning to Fig. 2, a pulse producing unit 102′ according to another embodiment of the present invention further including a set initial data register 151 storing set initial data "0000 0001" and a reset initial data register 152 storing reset initial data "0000 0001". The set initial data from the register 151 is written into the register 129 by a preset signal 153 and the reset initial data from the register 152 is written into the register 130 by a preset signal 154. These present signals 153 and 154 are generated by the execution control unit 116 when a shift-out occurs by shifting leftward the set and reset data, respectively. Therefore, the flow chart of the macro service according to this embodiment is shown in Fig. 5. In place of the step 308 shown in Fig. 3, a generation step 400 of the preset signal 153 or 154 is employed. Other constituents of this embodiment are the same as those shown in Fig. 1, and are thus deleted from Fig. 4. The microcomputer of this embodiment sets the initial data into the registers 129 and 130 without executing the interrupt program-, and therefore there is no overhead caused by executing the interrupt program.

The present invention is not limited to the above embodiments, but may be modified and changed without departing from the scope of the invention as it is defined in the appended claims.

## Claims

1. A microcomputer comprising a central processor (101) including a program memory (110) storing a program to be executed, a program counter (111) designating an address of said program memory (110) in which an instruction to be executed is stored, and an execution unit (104) executing the instruction from said program memory (110),
characterized in that said microcomputer further comprises a pulse producing unit (102) including a plurality of output terminals (P0-P7), register means (129,130) temporarily storing data for designating at least one of said output terminals (P0-P7) at which a pulse is to be produced, means (127,128) for generating a timing signal (132,133), and means (131) responsive to said timing signal (132,133) for producing a pulse at said at least one of said output terminal (P0-P7) designated by said data and that said central processor (101) further includes means (301) responsive to said timing signal for suspending said program being executed and means (302) for executing a macro service without saving a content of said program counter (111) and with holding the content of said program counter (111), said macro service executing means including means (303) for accessing said register (129,130) to read the data therefrom, means (304) for changing the read-out data, means (306) for writing the changed data into said register (129,130), and means (307) for allowing said program counter (111) to change the content thereof after said changed data is written into said register (129,130).

2. The microcomputer as claimed in claim 1, characterized in that said pulse producing unit (102) further includes a plurality of flip-flops (144) each coupled to the corresponding one of said output terminals (P0-P7) and a plurality of gate circuits (142,143) each supplied with said timing signal (132,133) and the corresponding bit of the data from said register means (129,130) and setting the corresponding one of said flip-flops (144).

3. The microcomputer as claimed in claim 1 or 2, wherein said execution unit (104) further includes means (308) for writing initial data into said register means (129,130) after the content of said program counter (111) is saved.

4. The microcomputer as claimed in claim 1 or 2, characterized in that said pulse producing unit (102) further includes storage means (151,152) for storing initial data and said macro service executing means further includes means for producing a preset signal (153,154) to write said initial data into said register means (129,130).

5. The microcomputer as claimed in claim 1, 2, 3 or 4, wherein said central processor (101) further includes a microprogram memory (1162) storing a microprogram for said macro service, and said microprogram is read out from said microprogram memory (1162) in response to said timing signal (132,133) and executed to perform said macro service.

6. The microcomputer as claimed in claim 1, 3, 4 or 5, characterized in that said timing signal generating means comprises means (127) for cyclically generating a set signal (132) and means (128) for cyclically generating a reset signal (133), that said register means comprises a first register (129) temporarily storing set data for designating said output terminal (P0-P7) to be set and a second register (130) temporarily storing reset data for designating said output terminal (P0-P7) to be reset.

## Patentansprüche

1. Mikrocomputer mit einem zentralen Prozessor (101) mit einem Programmspeicher (110), der ein auszuführendes Programm speichert, einem Programmzähler (111), der eine Adresse des Programmspeichers (110) bezeichnet, an der ein auszuführender Befehl gespeichert ist, und einer Ausführungseinheit (104), die den Befehl von dem Programmspeicher (110) ausführt,
dadurch **gekennzeichnet,** daß der Mikrocomputer zusätzlich aufweist eine Pulserzeugungseinheit (102) mit einer Anzahl von Ausgangsanschlüssen (P0 - P7), eine Registereinrichtung (129, 130) die Daten zur Bezeichnung mindestens eines der Ausgangsanschlüsse (P0 - P7) an dem ein Puls erzeugt werden soll, zeitweise speichert, Mittel (127, 128) zum Erzeugen eines Zeitsteuersignals (132, 133) und Mittel (131), die auf das Zeitsteuersignal (132, 133) ansprechen zur Erzeugung eines Pulses an dem durch die Daten bezeichneten mindestens einen Ausgangsanschluß (P0 - P7), und daß der zentrale Prozessor (101) ferner aufweist Mittel (301), die auf das Zeitsteuersignal ansprechen, um das in Ausführung befindliche Programm zu unterbrechen, und Mittel (302) zum Ausführen eines Makroservice ohne Zwischenspeicherung des Inhalts des Programmzählers (101) und unter Halten des Inhalts des Programmzählers (111), wobei die Einrichtung zur Ausführung des Makroservice Mittel (303) für den Zugriff auf Register (129, 130) zum Auslesen der Daten, Mittel (304) zum Ändern der ausgelesenen Daten, Mittel (306) zum Schreiben der geänderten Daten in das Register (129, 130) und Mittel (307), die eine Änderung des Inhalts des Programmzählers (111) nach dem Einschreiben der geänderten Daten in das Register (129, 130) ermöglichen, aufweist.

2. Mikrocomputer nach Anspruch 1,
dadurch **gekennzeichnet,** daß die Pulserzeugungseinheit (102) ferner aufweist eine Anzahl von Flip-Flops (144), von denen jedes mit einem entsprechenden Ausgangsanschluß (P0 - P7) verbunden ist, und eine Anzahl von Torschaltungen (142, 143), von denen jede mit dem Zeitsteuersignal (132, 133) und dem entsprechenden Bit der Daten von der Registereinrichtung (129, 130) beaufschlagt ist und das jeweils entsprechende Flip-Flop (144) setzt.

3. Mikrocomputer nach Anspruch 1 oder 2,
bei dem die Ausführungseinheit (104) ferner Mittel (308) aufweist zum Einschreiben von Anfangsdaten in die Registereinrichtung (129, 130), nachdem der Inhalt des Programmzählers (111) zwischengespeichert wurde.

4. Mikrocomputer nach Anspruch 1 oder 2,
dadurch **gekennzeichnet,** daß die Pulserzeugungseinheit (102) ferner Speichermittel (151, 152) zum Speichern von Anfangsdaten aufweist und daß die Einrichtung zur Ausführung des Makroservice ferner Mittel zum Erzeugen eines Preset-Signals (153, 154) zum Einschreiben der Anfangsdaten in die Registereinrichtung (129, 130) aufweist.

5. Mirkocomputer nach Anspruch 1, 2, 3 oder 4,
bei dem der zentrale Prozessor (101) ferner einen Mikroprogrammspeicher (1162) aufweist, der ein Mikroprogramm für den Makroservice speichert, und daß das Mikroprogramm von dem Mikroprogrammspeicher (1162) in Abhängigkeit von dem Zeitsteuersignal (132, 133) ausgelesen und zur Durchführung des Makroservice ausgeführt wird.

6. Mikrocomputer nach Anspruch 1, 3, 4 oder 5,
dadurch **gekennzeichnet,** daß die Mittel zur Erzeugung des Zeitsteuersignals Mittel (127) zum zyklischen Erzeugen eines Stellsignals (132) und Mittel (128) zum zyklischen Erzeugen eines Rückstellsignals (133) aufweisen, und daß die Registereinrichtung ein erstes Register (129), das Einstelldaten zum Bezeichnen des zu setzenden Ausgangsanschlusses (P0 - P7) zeitweise speichert, und ein zweites Register (130), das Rückstelldaten zum Bezeichnen des rückzustellenden Ausgangsanschlusses (P0 - P7) zeitweise speichert, aufweist.

## Revendications

1. Micro-ordinateur comprenant un processeur central (101) comportant une mémoire de programme (110) mémorisant un programme à exécuter, un compteur d'instruction (111) désignant une adresse de ladite mémoire de programme (110) dans laquelle une instruction à exécuter est mémorisée, et une unité d'exécution (104) exécutant l'instruction provenant de ladite mémoire de programme (110),
caractérisé en ce que ledit micro-ordinateur comprend en outre une unité de production d'impulsions (102) comportant une pluralité de bornes de sortie (P0-P7), des moyens à registres (129,130) mémorisant temporairement des données pour désigner au moins une desdites bornes de sortie (P0-P7) à laquelle une impulsion doit être produite, des moyens (127,128) pour générer un signal de synchronisation (132,133), et des moyens (131) sensibles audit signal de synchronisation (132,133) pour produire une impulsion à ladite au moins une desdites bornes de sortie (P0-P7) désignée par lesdites données et en ce que ledit processeur central (101) comporte en outre des moyens (301) sensibles audit signal de synchronisation pour suspendre ledit programme qui est exécuté et des moyens (302) pour exécuter un service macro sans sauvegarder le contenu dudit compteur d'instruction (111) et maintenant le contenu dudit compteur d'instruction (111), lesdits moyens d'exécution du service macro comportant des moyens (303) pour accéder audit registre (129,130) pour y lire les données, des moyens (304) pour changer les données de lecture, des moyens (306) pour écrire les données changées dans ledit registre (129,130), et des moyens (307) pour permettre audit compteur d'instruction (111) de changer son contenu après que lesdites données changées ont été écrites dans ledit registre (129,130).

2. Micro-ordinateur selon la revendication 1, caractérisé en ce que ladite unité de production d'impulsions (102) comporte en outre une pluralité de bascules bistables (144), chacune étant couplée à la borne correspondante desdites bornes de sortie (P0-P7), et une pluralité de circuits portes (142,143), chacun recevant ledit signal de synchronisation (132,133) et le bit correspondant des données provenant desdits moyens à registres (129,130) et positionnant la bascule correspondante desdites bascules bistables (144).

3. Micro-ordinateur selon la revendication 1 ou 2, dans lequel ladite unité d'exécution (104) comporte en outre des moyens (308) pour écrire des données initiales dans lesdits moyens à registres (129,130) après que le contenu dudit compteur d'instruction (111) a été sauvegardé.

4. Micro-ordinateur selon la revendication 1 ou 2, caractérisé en ce que ladite unité de production d'impulsions (102) comporte en outre des moyens de mémorisation (151,152) pour mémoriser des données initiales et lesdits moyens d'exécution du service macro comportent en outre des moyens pour produire un signal de prépositionnement (153,154) pour écrire lesdites données initiales dans lesdits moyens à registres (129,130).

5. Micro-ordinateur selon la revendication 1, 2, 3 ou 4, dans lequel ledit processeur central (101) comporte en outre une mémoire de microprogramme (1162) mémorisant un microprogramme pour ledit service macro, et ledit microprogramme est lu dans ladite mémoire de microprogramme (1162) en réponse audit signal de synchronisation (132,133) et exécuté pour effectuer ledit service macro.

6. Micro-ordinateur selon la revendication 1, 3, 4 ou 5, caractérisé en ce que lesdits moyens de génération de signal de synchronisation comprennent des moyens (127) pour la génération cyclique d'un signal de mise à un (132) et des moyens (128) pour la génération cyclique d'un signal de mise à zéro (133), et en ce que lesdits moyens à registres comprennent un premier registre (129) mémorisant temporairement des données de mise à un pour désigner ladite borne de sortie (P0-P7) qui doit être mise à un et un second registre (130) mémorisant temporairement des données de mise à zéro pour désigner ladite borne de sortie (P0-P7) qui doit être mise à zéro.
